# EUROPEAN PATENT SPECIFICATION

(11) **EP 3 172 659 B1**
(45) Date of publication and mention of the grant of the patent: **26.02.2020**
(21) Application number: 15739106.1
(22) Date of filing: 26.06.2015
(51) Int. Cl.: G06F 9/30

(54) **PARALLELIZATION OF SCALAR OPERATIONS BY VECTOR PROCESSORS USING DATA-INDEXED ACCUMULATORS IN VECTOR REGISTER FILES, AND RELATED CIRCUITS, METHODS, AND COMPUTER-READABLE MEDIA**
PARALLELISIERUNG VON SKALAREN OPERATIONEN DURCH VEKTORPROZESSOREN MIT DATENINDEXIERTEN AKKUMULATOREN IN VEKTORREGISTERDATEIEN UND ZUGEHÖRIGE SCHALTUNGEN, VERFAHREN SOWIE COMPUTERLESBARE MEDIEN
PARALLÉLISATION D'OPÉRATIONS SCALAIRES PAR DES PROCESSEURS VECTORIELS À L'AIDE D'ACCUMULATEURS INDEXÉS SUR LES DONNÉES DANS DES FICHIERS DE REGISTRES VECTORIELS, ET CIRCUITS, PROCÉDÉS ET SUPPORTS LISIBLES PAR ORDINATEUR ASSOCIÉS

(30) Priority: 25.07.2014 US 201462029039 P; 15.09.2014 US 201414486326
(43) Date of publication of application: 31.05.2017
(73) Proprietor: Qualcomm Incorporated, San Diego, CA 92121-1714 (US)
(72) Inventor: CODRESCU, Lucian, San Diego, California 92121 (US); MAHURIN, Eric, Wayne, San Diego, California 92121 (US)
(74) Representative: Tomkins & Co
(86) International application number: PCT/US2015/038013
(87) International publication number: WO 2016/014213

(56) References cited:
- EP-A2- 2 290 525
- WO-A1-01/09717
- WO-A2-2009/120981
- GB-A- 2 216 307
- US-A1- 2013 185 539
- US-B1- 7 506 135

## Description

### BACKGROUND

### I. Field of the Disclosure

The technology of the disclosure relates generally to parallel data processing using vector processors.

### II. Background

One class of computational tasks encountered by modern computer processors involves performing scalar operations on one of a number of accumulators based on input data, with a value of the input data determining which accumulator is a target of each scalar operation. A non-limiting example of this class of computational tasks is histogram generation. To generate a histogram, a processor calculates cumulative frequencies of occurrence for individual data values or ranges of data values within input data (e.g., by counting a number of times each data value appears within the input data). In this manner, overall distribution of data values within the input data may be determined, and may be used to generate a visual representation of the distribution.

Histograms are frequently used in image processing to illustrate tonal distribution in a digital image by plotting a number of pixels for each tonal value within the digital image. For instance, the digital image may comprise pixels each having an 8- bit intensity value. Accordingly, generating a histogram from the digital image may require a processor to use 256 (i.e., 2⁸) accumulators, with each accumulator corresponding to one of the possible intensity values for the pixels of the digital image. The processor carries out operations to examine each pixel of the digital image and determine an intensity value for the pixel. The intensity value for the pixel is then used to determine which accumulator should be incremented.

WO2009120981 discloses vector instructions to enable efficient synchronization and parallel reduction operations. US7506135 discloses a method of histogram generation with vector operations in a SIMD and VLIW processor by consolidating LUTs storing parallel update incremented count values for vector data elements

Computational tasks such as histogram generation may be computationally intensive, as processing of each data value involves receiving the data value as input, retrieving a value of an accumulator corresponding to the data value, and writing a new value to the accumulator based on a scalar operation performed on the retrieved value. Thus, each data value may require multiple processor clock cycles to process. Moreover, processing of the input data may be further limited by an availability of bandwidth to update accumulators. For example, a data cache in which the accumulators are stored may provide only a limited number of read paths and/or write paths during each processor clock cycle.

One approach for optimizing this class of computational tasks involves the use of multicore processing to parallelize scalar operations using multiple instruction, multiple data (MIMD) techniques. Under this approach, each processing thread of a multicore processor provides a private set of accumulators, and processes one section of input data. The accumulators for each of the processing threads are then "reduced," or added together, after all processing threads complete processing on their respective portions of the input data. However, this approach may result in dependency issues and/or memory conflicts among processing threads, and may provide only minimal performance increases as additional processing clusters are used.

### SUMMARY OF THE DISCLOSURE

The present disclosure is directed towards vector processors, methods for parallelizing scalar operations in vector processors and non-transitory computer-readable mediums, the features of which are set out in the appended claims. Illustrative exemplary aspects disclosed in the detailed description include parallelization of scalar operations by vector processors using data-indexed accumulators in vector register files. Related circuits, methods, and computer-readable media are also disclosed. In this regard, in one aspect, a vector processor is configured to provide single instruction, multiple data (SIMD) functionality for parallelizing scalar operations. The vector processor includes a vector register file providing a plurality of vector registers. Each vector register is logically subdivided into a plurality of accumulators. The total number of accumulators in the plurality of vector registers corresponds to a number of possible data values in anticipated input data. The vector register file also provides a plurality of write ports that enable multiple writes to be made to the vector registers during each processor clock cycle. To enable parallelization of scalar operations, the vector processor is configured to receive an input data vector. The vector processor then executes vector operations to access an input data value (e.g., a subset of the input data vector) for each write port of the vector register file. For each input data value, a register index and an accumulator index are determined. Together, the register index and the accumulator index may serve as a mapping to the appropriate accumulator, with the register index indicative of the vector register containing the accumulator and the accumulator index indicative of the specific accumulator within the vector register. Accordingly, the accumulators may be considered "data-indexed," in that the input data value determines the accumulator to be acted upon. A scalar operation is performed on the vector register indicated by the register index, with the specific scalar operation based on the register index and the accumulator index. In this manner, the vector processor can take advantage of the data parallelization capabilities of the vector register file to increase processing bandwidth, thus improving overall processing performance.

In another aspect, a vector processor comprising a vector register file is provided. The vector register file includes a plurality of vector registers, each configured to provide a plurality of accumulators. The vector register file is also configured to provide a plurality of write ports. The vector processor is configured to receive an input data vector. For each write port of the plurality of write ports, the vector processor is configured to execute one or more vector operations to access an input data value of the input data vector. The vector processor is further configured to, for each write port of the plurality of write ports, determine, based on the input data value, a register index indicative of a vector register among the plurality of vector registers. The vector processor is also configured to, for each write port of the plurality of write ports, determine, based on the input data value, an accumulator index indicative of an accumulator among the plurality of accumulators of the vector register. The vector processor is additionally configured to, based on the register index and the accumulator index, perform a scalar operation on the vector register indicated by the register index.

In another aspect, a vector processor is provided, comprising a means for receiving an input data vector. The vector processor further comprises, for each write port of a plurality of write ports of a vector register file of the vector processor, a means for accessing an input data value of the input data vector. The vector processor also comprises, for each write port of the plurality of write ports, a means for determining, based on the input data value, a register index indicative of a vector register among a plurality of vector registers in the vector register file. The vector processor additionally comprises, for each write port of the plurality of write ports, a means for determining, based on the input data value, an accumulator index indicative of an accumulator among a plurality of accumulators of the vector register. The vector processor further comprises, for each write port of the plurality of write ports, a means for performing a scalar operation on the vector register indicated by the register index, based on the register index and the accumulator index.

In another aspect, a method for parallelizing scalar operations in vector processors is provided. The method comprises receiving, by a vector processor, an input data vector. The method further comprises, for each write port of a plurality of write ports of a vector register file of the vector processor, executing one or more vector operations to access an input data value of the input data vector. The method also comprises, for each write port of the plurality of write ports, executing the one or more vector operations to determine, based on the input data value, a register index indicative of a vector register among a plurality of vector registers in the vector register file. The method additionally comprises, for each write port of the plurality of write ports, executing the one or more vector operations to determine, based on the input data value, an accumulator index indicative of an accumulator among a plurality of accumulators of the vector register. The method further comprises, for each write port of the plurality of write ports, executing the one or more vector operations to perform a scalar operation on the vector register indicated by the register index, based on the register index and the accumulator index

In another aspect, a non-transitory computer-readable medium having stored thereon computer-executable instructions is provided. The computer-executable instructions cause a vector processor to receive an input data vector. The computer-executable instructions further cause the vector processor to, for each write port of a plurality of write ports of a vector register file of the vector processor, execute one or more vector operations to access an input data value of the input data vector. The computer-executable instructions also cause the vector processor to, for each write port of the plurality of write ports, execute the one or more vector operations to determine, based on the input data value, a register index indicative of a vector register among a plurality of vector registers in the vector register file. The computer-executable instructions additionally cause the vector processor to, for each write port of the plurality of write ports, execute the one or more vector operations to determine, based on the input data value, an accumulator index indicative of an accumulator among a plurality of accumulators of the vector register. The computer-executable instructions further cause the vector processor to, for each write port of the plurality of write ports, execute the one or more vector operations to perform a scalar operation on the vector register indicated by the register index, based on the register index and the accumulator index.

### BRIEF DESCRIPTION OF THE FIGURES

Figure 1 is a block diagram of an exemplary computer processor that may include a vector processor for parallelizing scalar operations;
Figure 2 is a block diagram of exemplary communications flows and logical elements within the vector processor of Figure 1 for parallelization of scalar operations;
Figure 3 is a diagram illustrating exemplary results of the vector processor of Figure 1 processing an input data value;
Figure 4 is a flowchart illustrating an exemplary process for parallelization of scalar operations by the vector processor of Figure 1 using data-indexed accumulators in vector register files;
Figure 5 is a flowchart illustrating further exemplary operations for merging scalar operations by the vector processor of Figure 1; and
Figure 6 is a block diagram of an exemplary processor-based system that can include the vector processor of Figure 1.

### DETAILED DESCRIPTION

With reference now to the drawing figures, several exemplary aspects of the present disclosure are described. The word "exemplary" is used herein to mean "serving as an example, instance, or illustration." Any aspect described herein as "exemplary" is not necessarily to be construed as preferred or advantageous over other aspects.

Aspects disclosed in the detailed description include parallelization of scalar operations by vector processors using data-indexed accumulators in vector register files. Related circuits, methods, and computer-readable media are also disclosed. In this regard, in one aspect, a vector processor is configured to provide single instruction, multiple data (SIMD) functionality for parallelizing scalar operations. The vector processor includes a vector register file providing a plurality of vector registers. Each vector register is logically subdivided into a plurality of accumulators. The total number of accumulators in the plurality of vector registers corresponds to a number of possible data values in anticipated input data. The vector register file also provides a plurality of write ports that enable multiple writes to be made to the vector registers during each processor clock cycle. To enable parallelization of scalar operations, the vector processor is configured to receive an input data vector. The vector processor then executes vector operations to access an input data value (e.g., a subset of the input data vector) is accessed for each write port of the vector register file. For each input data value, a register index and an accumulator index are determined. Together, the register index and the accumulator index may serve as a mapping to the appropriate accumulator, with the register index indicative of the vector register containing the accumulator and the accumulator index indicative of the accumulator within the vector register. Accordingly, the accumulators may be considered "data-indexed," in that the input data value determines the accumulator to be acted upon. A scalar operation is performed on the vector register indicated by the register index, with the specific scalar operation based on the register index and the accumulator index. In this manner, the vector processor can take advantage of the data parallelization capabilities of the vector register file to increase processing bandwidth, thus improving overall processing performance.

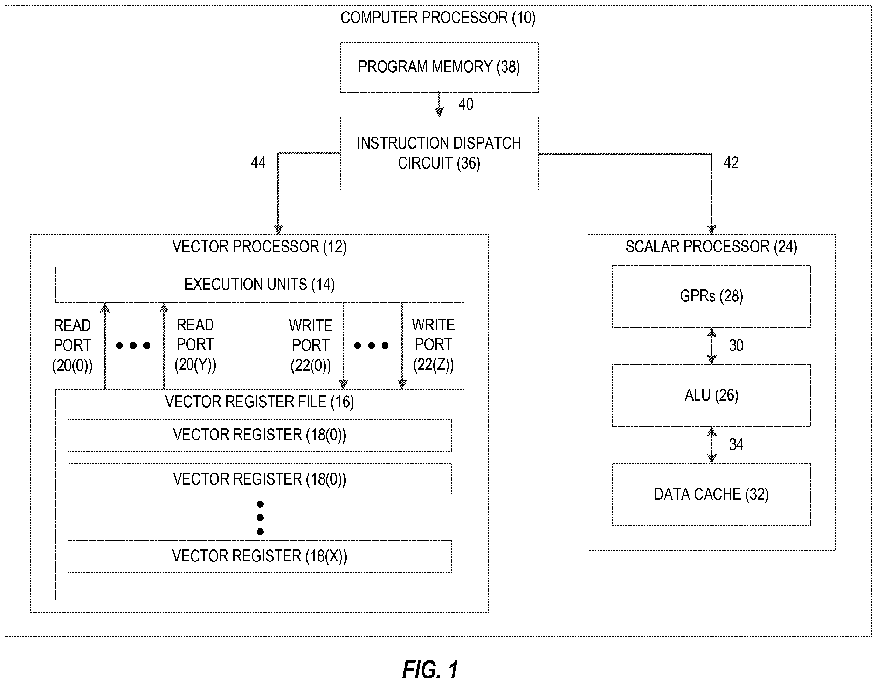

In this regard, Figure 1 is a schematic diagram of a computer processor 10 that includes an exemplary vector processor 12 for parallelization of scalar operations. As will be discussed in more detail below, the vector processor 12 includes execution units 14 and a vector register file 16, along with other particular exemplary circuitry and functionality to provide vector processing operations including the exemplary vector processing operations disclosed herein. The computer processor 10 and its vector processor 12 may encompass any one of known digital logic elements, semiconductor circuits, processing cores, and/or memory structures, among other elements, or combinations thereof.

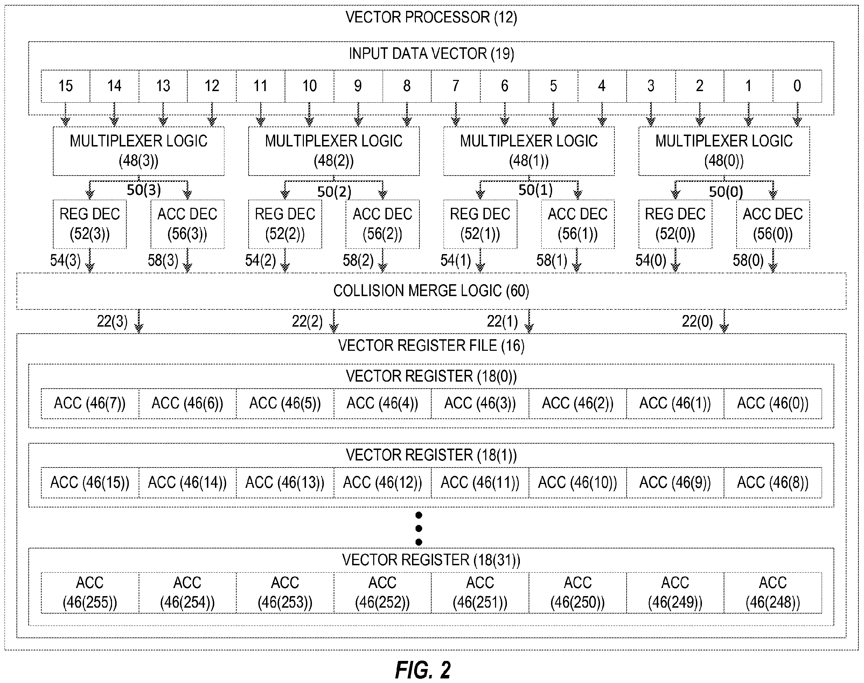

Before discussing the particular circuitry and vector processing operations configured to be provided by the vector processor 12 in this disclosure for parallelization of scalar operations using the vector register file 16 starting with Figure 2, the components of the computer processor 10 in Figure 1 are first described. As noted above, the vector processor 12 includes the vector register file 16, which provides vector registers 18(0)-18(X). The vector registers 18(0)-18(X) may store data to be acted upon by vector instructions executed in a SIMD fashion by the vector processor 12. In some aspects, the vector register file 16 may be implemented using a plurality of physical register files (not shown), each providing multiple read ports 20(0)-20(Y) and multiple write ports 22(0)-22(Z) per processor clock cycle. The physical register files may comprise, for instance, fast Random Access Memory (RAM). The vector register file 16 may comprise more than one physical register file, each providing its own read ports and write ports. For example, the vector register file 16 may be 512 bits wide, and may be implemented as four (4) 128-bit-wide physical register files, each providing eight (8) read ports and four (4) write ports per processor clock cycle. To support the illustrated elements of the vector processor 12, the computer processor 10 and/or the vector processor 12 may include other additional components, which are omitted from Figure 1 for the sake of clarity.

With continuing reference to Figure 1, the computer processor 10 in this aspect also includes a scalar processor 24 to provide scalar processing in the computer processor 10 in addition to vector processing provided by the vector processor 12. In this manner, the computer processor 10 may be configured to support both vector and scalar instruction operations based on a type of instruction executed for highly efficient operation. In some aspects, the scalar processor 24 may be a 32-bit reduced instruction set computing (RISC) scalar processor as a non-limiting example. The scalar processor 24 includes an arithmetic logic unit (ALU) 26 for supporting scalar instruction processing in this example. The scalar processor 24 may also include general purpose registers (GPRs) 28 for use by the scalar processor 24 when executing scalar instructions. The general purpose registers 28 may be communicatively coupled to the ALU 26, as indicated by arrow 30. The scalar processor 24 may further include a data cache 32 communicatively coupled to the ALU 26, as shown by arrow 34. The data cache 32 may be used for high-speed storage and retrieval of data frequently used by the ALU 26.

The computer processor 10 further includes an instruction dispatch circuit 36 configured to fetch instructions from program memory 38, as indicated by arrow 40. The instruction dispatch circuit 36 may decode the fetched instructions. Based on a type of the instructions, the instruction dispatch circuit 36 may direct the fetched instructions to either the scalar processor 24 via a scalar data path 42, or through a vector data path 44 to the vector processor 12.

As discussed above, one class of computational tasks that may be encountered by the computer processor 10 involves performing scalar operations on data-indexed accumulators (i.e., accumulators for which a value of input data determines which accumulator is a target of the scalar operation). Carrying out these computational tasks using the scalar processor 24 may result in suboptimal processor performance. As an example, each input data value may require multiple processor clock cycles for the scalar processor 24 to process. Processing of the input data may be further limited by the bandwidth available to the scalar processor 24 to update the accumulators. For instance, the accumulators may be stored in the data cache 32, which may provide only a limited number of read ports (not shown) and/or write ports (not shown) during each processor clock cycle.

In this regard, the vector processor 12 of Figure 1 is configured to provide parallelization of scalar operations using data-indexed accumulators in the vector register file 16. To illustrate exemplary communications flows and logical elements within the vector processor 12 during parallelization of scalar operations, Figure 2 is provided. For purposes of illustration, the computational task to be carried out by the vector processor 12 is assumed to be the generation of a histogram for a digital image containing pixels each having an 8-bit intensity value.

In the example of Figure 2, the vector register file 16 of the vector processor 12 includes a total of thirty-two (32) vector registers 18, referred to as vector registers 18(0)-18(31). Each of the vector registers 18 is logically subdivided into eight accumulators ("ACC") 46, with the vector register 18(0) containing accumulators 46(0)-46(7), the vector register 18(1) containing accumulators 46(8)-46(15), and so forth up to the vector register 18(31) containing accumulators 46(248)-46(255). Each of the accumulators 46(0)-46(255) stores a value indicating a count of pixels in the digital image having an intensity of 0-255, respectively. Thus, the scalar operations to be parallelized by the vector processor 12 in this example comprise incrementing values stored in one or more of the accumulators 46(0)-46(255). It is to be understood that, in some aspects, the scalar operations to be parallelized may comprise additional and/or different arithmetic and/or logical operations to be carried out on the values stored in one or more of the accumulators 46(0)-46(255).

The vector register file 16 in this example provides a total of four (4) write ports 22(0)-22(3), enabling up to four (4) of the vector registers 18 to be updated during each processor clock cycle. The write ports 22(0)-22(3) correspond to the write ports 22(0)-22(Z) of Figure 1, and provide functionality corresponding to that of the write ports 22(0)-22(Z). Some aspects of the vector register file 16 may provide more or fewer write ports 22 than illustrated in Figure 2. In some aspects, the vector register file 16 shown in Figure 2 may correspond to one of a plurality of physical register files (not shown), each providing write ports 22. The vector register file 16 may thus further comprise additional physical register files and additional write ports 22 not shown in Figure 2.

The vector processor 12 receives an input data vector 19 representing a set of pixel intensity values within the digital image for which a histogram will be generated. In this example, the input data vector 19 is a vector comprising sixteen (16) values numbered 0-15. According to some aspects, the input data vector 19 may be a 128-bit vector of sixteen (16) 8-bit values. The input data vector 19 may be received as an input stream (not shown), or may be stored in a register or other memory (not shown) accessible to the vector processor 12, as non-limiting examples. In some aspects, the input data vector 19 may comprise more or fewer bits and/or more or fewer values than shown in Figure 2.

For each of the write ports 22(0)-22(3), the vector processor 12 provides corresponding multiplexer logic blocks 48(0)-48(3). In some aspects, the multiplexer logic blocks 48(0)-48(3) may be implemented as microcode defining vector instructions for performing operations described herein. Each multiplexer logic block 48 receives, as input, a subset of the input data vector 19, and selects one input data value 50 from the subset for processing during a processor clock cycle. In the example of Figure 2, each of the multiplexer logic blocks 48 receives four (4) values from the input data vector 19, and selects one input data value 50 from the four (4) values. Accordingly, the entire input data vector 19 may be processed by the vector processor 12 in four (4) processor clock cycles.

As discussed above, when generating a histogram, each of the input data values 50 indicates which accumulator 46 is to be incremented. For example, if the input data value 50(0) is 255 (indicating a pixel intensity of 255), the vector processor 12 should cause the corresponding accumulator 46(255) to be incremented. Because the accumulators 46 are stored within the vector registers 18(0)-18(31), it is necessary for the vector processor 12 to decode the input data values 50 to determine which specific vector register 18 contains the accumulator 46 to be incremented. Accordingly, the vector processor 12 as shown in Figure 2 provides register decoders ("REG DEC") 52(0)-52(3) for the multiplexer logic blocks 48(0)-48(3), respectively. In some aspects, the register decoders 52(0)-52(3) may be implemented as microcode defining vector instructions for performing operations described herein.

Each of the register decoders 52(0)-52(3) receives respective input data values 50(0)-50(3) from corresponding multiplexer logic blocks 48(0)-48(3), and operates on the input data values 50(0)-50(3) to generate register indices 54(0)-54(3), respectively. Each of the register indices 54(0)-54(3) is indicative of one of the vector registers 18 containing the accumulator 46 to be incremented. In the example of Figure 2, each of the register decoders 52 operates on a corresponding input data value 50 to generate a register index 54 having a value in the range from 0 to 31. Because each of the input data values 50 in this example is an 8-bit value, generating the register indices 54 may be accomplished by performing a logical right shift of the eight (8) bits of each of the input data values 50 by three (3) bits. It is to be understood that additional and/or different operations may be carried out by the register decoders 52 to generate the register indices 54.

As seen in Figure 2, each of the vector registers 18(0)-18(31) contains eight (8) accumulators 46. Thus, it is further necessary for the vector processor 12 to decode the input data values 50 to determine which specific accumulators 46 within the vector registers 18 identified by the register indices 54 should be incremented. In this regard, the vector processor 12 provides accumulator decoders ("ACC DEC") 56(0)-56(3) for the multiplexer logic blocks 48(0)-48(3), respectively. Some aspects may provide that the accumulator decoders 56(0)-56(3) are implemented as microcode defining vector instructions for performing operations described herein.

The accumulator decoders 56(0)-56(3) receive respective input data values 50(0)-50(3) from corresponding multiplexer logic blocks 48(0)-48(3), and operate on the input data values 50(0)-50(3) to generate accumulator indices 58(0)-58(3), respectively. Each of the accumulator indices 58(0)-58(3) is indicative of one of the accumulators 46 within one of the vector registers 18 identified by a corresponding one of the register indices 54. In this example, each of the accumulator indices 58 must be a value in the range from 0 to 7 (i.e., a 3-bit value), indicating which of the eight (8) accumulators 46 within one of the vector registers 18 identified by a corresponding one of the register indices 54 is to be incremented. Thus, generating the accumulator indices 58 may be accomplished by masking the five (5) high-order bits of each of the input data values 50 (e.g., by performing logical AND operations). It is to be understood that additional and/or different operations may be carried out by the accumulator decoders 56 to generate the accumulator indices 58.

Once the register indices 54 and the accumulator indices 58 have been generated, the vector processor 12 may synthesize vector instructions (not shown) to perform scalar operations on the vector registers 18 appropriately. In the example of Figure 2, where the computational task being carried out is histogram generation, the vector processor 12 may execute vector instructions to increment the accumulators 46 based on the register indices 54 and the corresponding accumulator indices 58. In some aspects, incrementing the plurality of accumulators 46 may include operations for retrieving a register value of one of the vector registers 18, performing a scalar operation (addition, in this example) based on the register value and the corresponding one of the accumulator indices 58 to generate a result value, and storing the result value in the vector register 18. It is to be understood that some aspects may provide that the result value may be generated by additional and/or other scalar operations besides those discussed in this example. It is to be further understood that the scalar operation may include, for example, calculating a weighted histogram, in which a weighting value (not shown) included as part of one of the input data values 50(0)-50(3) is added to the register value of one of the vector registers 18 to generate the result value.

As discussed above, in the example of Figure 2, four (4) scalar operations (one on each of the write ports 22(0)-22(3)) may be accomplished by the vector processor 12 during each processor clock cycle. In some circumstances, the vector processor 12 may determine that one or more of the scalar operations may be merged. For instance, two or more of the input data values 50 may be different, but may be close enough in value that two or more of the accumulators 46 within a single one of the vector registers 18 may need to be incremented during a single processor clock cycle. Two or more of the input data values 50 may even be the same, in which case the same one of the accumulators 46 may need to be incremented more than once during a processor clock cycle. Accordingly, the vector processor 12, in some aspects, may provide a collision merge logic block 60 for determining whether one or more of the scalar operations may be merged into a single merged scalar operation. In some aspects, the collision merge logic block 60 may be implemented as microcode defining vector instructions for performing operations described herein.

Some aspects may provide that the collision merge logic block 60 may determine that two or more of the register indices 54 corresponding to two or more of the write ports 22 are identical. In such a case, the vector processor 12 may synthesize vector instructions to merge the scalar operations to be performed on multiple accumulators 46 within the vector register 18 indicated by the matching register indices 54 into a single merged scalar operation. In some aspects, the collision merge logic block 60 may further determine that two or more of the accumulator indices 58 corresponding to the matching register indices 54 are also identical. Accordingly, the vector processor 12 may synthesize vector instructions to merge the scalar operations to be performed on the accumulator 46 indicated by the matching accumulator indices 58 into a merged scalar operation (e.g., to increment the accumulator 46 by more than one).

As noted above, in some aspects, the vector register file 16 of Figure 1 may be implemented as a plurality of physical register files (not shown), each providing one or more write ports of the plurality of write ports 22. In such aspects, the vector processor 12 may be configured to carry out the operations described above with respect to Figure 2 simultaneously for each of the plurality of physical register files, resulting in even greater parallelization. As a non-limiting example, the input data vector 19 may be received as a plurality of input data vector subsets (not shown), each of which may correspond to one of the plurality of physical register files. The vector processor 12 may then execute vector operations simultaneously for each write port 22 of each physical register file to concurrently process the input data vector subsets. In this manner, each of the plurality of physical register files may be used as a separate "lane" for parallel processing of a portion of the input data into a histogram corresponding to that portion of the input data. The vector processor 12, in some aspects, may then sum the corresponding accumulators 46 in the vector registers 18 of each physical register files to create a histogram for the entire body of input data.

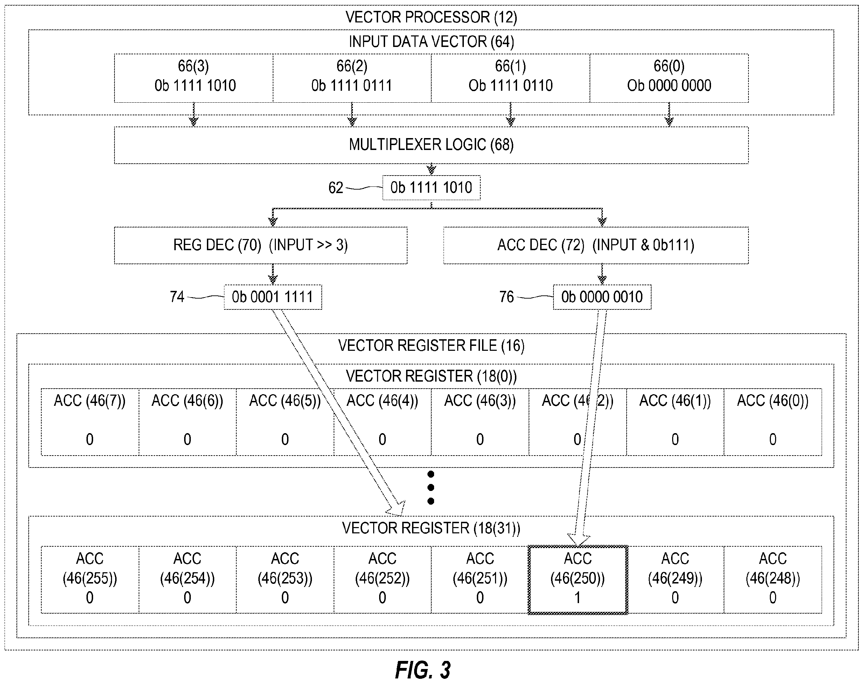

Figure 3 illustrates exemplary results of the vector processor 12 of Figure 2 processing an input data value 62 of an input data vector 64. For the sake of clarity, Figure 3 only shows a single input data value 62 being processed, corresponding to scalar operations via one of the write ports 22 of the vector register file 16 of Figure 2. However, it is to be understood that the vector processor 12 may carry out multiple instances of the processing illustrated by Figure 3 in parallel for multiple write ports 22 of the vector register file 16 of Figure 2.

In Figure 3, the vector register file 16 of the vector processor 12 includes a total of thirty-two (32) vector registers 18, referred to as vector registers 18(0)-18(31). Each of the vector registers 18 is logically subdivided into eight (8) accumulators ("ACC") 46, with the vector register 18(0) containing accumulators 46(0)-46(7), and so forth up to the vector register 18(31) containing accumulators 46(248)-46(255). Each of the accumulators 46 is initialized to a value of zero (0) before processing begins.

In Figure 3, the vector processor 12 receives the input data vector 64, and may provide a subset comprising 8-bit values 66(0)-66(3) of the input data vector 64 to a multiplexer logic block 68. The multiplexer logic block 68 selects one of the values 66 (in this example, value 66(3)) as the input data value 62. As seen in Figure 3, the input data value 62 has a binary value of 1111 1010 (250 in decimal), representing a pixel intensity value of 250. The input data value 62 is then provided to a register decoder ("REG DEC") 70 and an accumulator decoder ("ACC DEC") 72 to map the input data value 62 to the proper vector register 18 and the proper accumulator 46.

In this example, the register decoder 70 generates a register index 74 for the input data value 62 by performing a logical right shift of a plurality of bits of the input data value 62 by three (3) bits. The result, as seen in Figure 3, is the register index 74 having a binary value of 0001 1111 (31 in decimal). The register index 74 thus indicates that the vector register 18(31) contains the accumulator 46 to be incremented by the vector processor 12. The accumulator decoder 72 generates an accumulator index 76 by masking the five (5) high-order bits of the input data value 62. This is accomplished by performing a logical AND operation on the input data value 62 and the binary value 111 (7 in decimal). The resulting accumulator index 76 has a binary value of 0000 0010, or 2 in decimal. Based on the accumulator index 76, the vector processor 12 may determine that the third accumulator 46 (counting from zero, from the right) of the vector register 18(31) is a target of a scalar operation. As shown in Figure 3, this corresponds to the accumulator 46(250). Accordingly, the vector processor 12 executes vector instructions to perform the scalar operation (in this case, to increment the accumulator 46(250) by one).

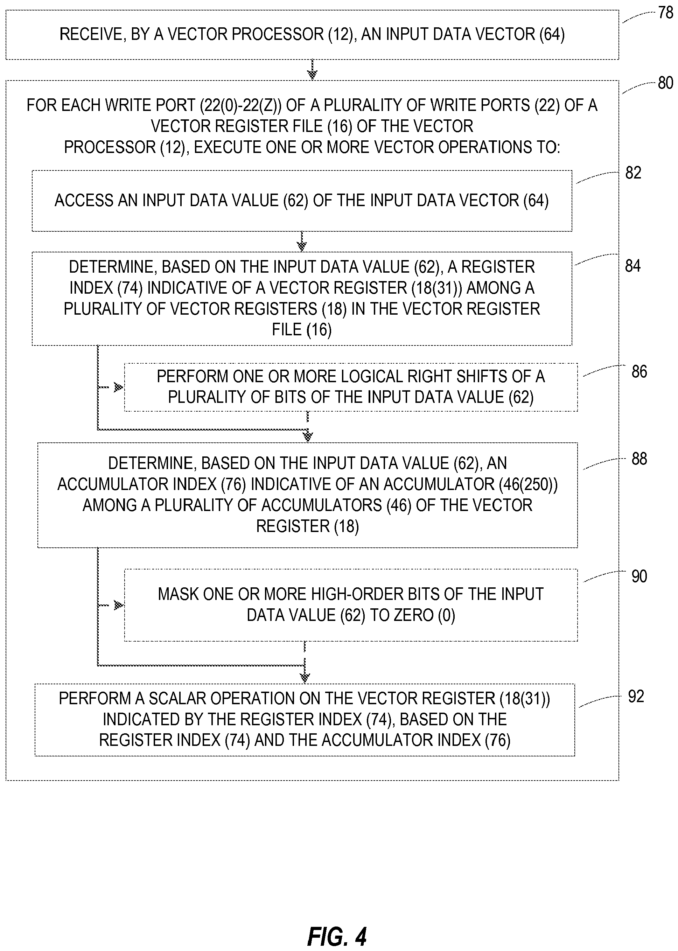

Figure 4 is a flowchart illustrating an exemplary process for parallelization of scalar operations by the vector processor 12 of Figure 2 using the accumulators 46 in the vector register file 16. For the sake of clarity, elements of Figures 2 and 3 are referenced in describing Figure 4. In Figure 4, operations begin with the vector processor 12 receiving an input data vector 64 (block 78). The vector processor 12 then executes vector instructions to perform operations for each write port 22(0)-22(Z) of a plurality of write ports 22 of a vector register file 16 of the vector processor 12, as indicated by block 80. It is to be understood that the operations illustrated in block 80 may be carried out concurrently for each of the plurality of write ports 22.

The vector processor 12 first accesses an input data value 62 of the input data vector 64 (block 82). As discussed above, the input data value 62 may represent a subset of the input data vector 64. Based on the input data value 62, the vector processor 12 determines a register index 74 indicative of a vector register 18(31) among a plurality of vector registers 18 in the vector register file 16 (block 84). In some aspects, the vector processor 12 may determine the register index 74 by performing one or more logical right shifts of a plurality of bits of the input data value 62 (block 86). The vector processor 12 also determines, based on the input data value 62, an accumulator index 76 indicative of an accumulator 46(250) among a plurality of accumulators 46 of the vector register 18 (block 88). Some aspects may provide that the vector processor 12 determines the accumulator index 76 by masking one or more high-order bits of the input data value 62 to zero (0) (block 90). It is to be understood that additional and/or other operations may be performed by the vector processor 12 to determine the register index 74 and/or the accumulator index 76 based on the input data value 62.

The vector processor 12 then performs a scalar operation on the vector register 18(31)) indicated by the register index 74, based on the register index 74 and the accumulator index 76 (block 92). As a non-limiting example, the scalar operation may comprise operations to increment the accumulator 46 indicated by the accumulator index 76. In some aspects, the scalar operation may include additional and/or other arithmetic and/or logical operations on the accumulator 46. For instance, the scalar operation may include calculating a weighted histogram in the accumulator 46 is incremented according to a weighting value (not shown) included as part of the input data values 62.

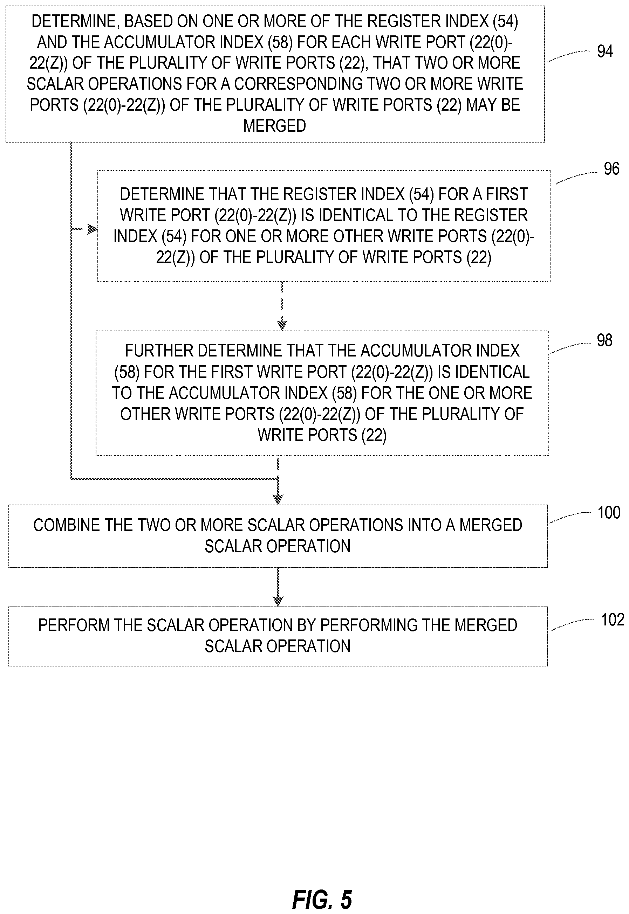

As discussed above with respect to Figure 2, the vector processor 12 may improve its performance in some circumstances by merging scalar operations to be performed during a single processor clock cycle. In this regard, Figure 5 is provided to illustrate further exemplary operations for merging scalar operations. Elements of Figures 2 and 3 are referenced in describing Figure 5, for the sake of clarity. It is to be understood that the operations illustrated in Figure 5 may take place subsequent to the operations of blocks 88 and 90 of Figure 4.

In Figure 5, the vector processor 12 determines, based on one or more of the register index 54 and the accumulator index 58 for each write port 22(0)-22(Z)) of the plurality of write ports 22, that two or more scalar operations for a corresponding two or more write ports 22(0)-22(Z) of the plurality of write ports 22 may be merged (block 94). In some aspects, the vector processor 12 may determine that two or more scalar operations may be merged by determining that the register index 54 for a first write port 22(0)-22(Z) is identical to the register index 54 for one or more other write ports 22(0)-22(Z) of the plurality of write ports 22 (block 96). Some aspects may provide that the vector processor 12 may determine that two or more scalar operations may be merged by further determining that the accumulator index 58 for the first write port 22(0)-22(Z) is identical to the accumulator index 58 for the one or more other write ports 22(0)-22(Z) of the plurality of write ports 22 (block 98).

The vector processor 12 next combines the two or more scalar operations into a merged scalar operation (block 100). As a non-limiting example, two scalar operations to increment the same accumulator 46 by one (1) may be merged into a merged scalar operation to increment the accumulator 46 by two (2). The vector processor 12 then performs the scalar operation by performing the merged scalar operation (block 102).

Parallelization of scalar operations by vector processors using data-indexed accumulators in vector register files according to aspects disclosed herein may be provided in or integrated into any processor-based device. Examples, without limitation, include a set top box, an entertainment unit, a navigation device, a communications device, a fixed location data unit, a mobile location data unit, a mobile phone, a cellular phone, a computer, a portable computer, a desktop computer, a personal digital assistant (PDA), a monitor, a computer monitor, a television, a tuner, a radio, a satellite radio, a music player, a digital music player, a portable music player, a digital video player, a video player, a digital video disc (DVD) player, and a portable digital video player.

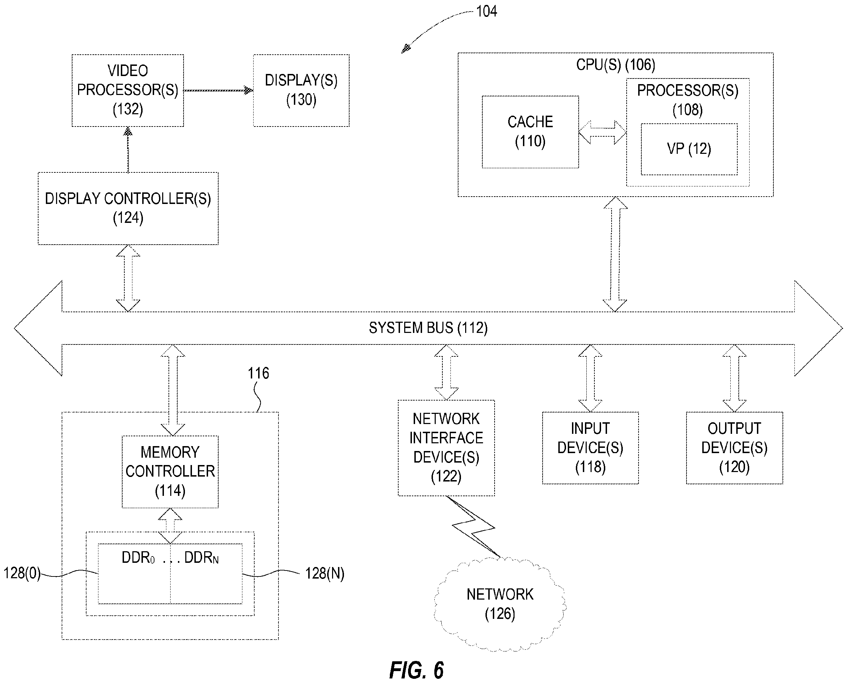

In this regard, Figure 6 illustrates an example of a processor-based system 104 that can employ the vector processor (VP) 12 illustrated in Figures 1-3. In this example, the processor-based system 104 includes one or more central processing units (CPUs) 106, each including one or more processors 108. The one or more processors 108 may include the vector processor (VP) 12 of Figures 1-3. The CPU(s) 106 may be a master device. The CPU(s) 106 may have cache memory 110 coupled to the processor(s) 108 for rapid access to temporarily stored data. The CPU(s) 106 is coupled to a system bus 112 and can intercouple master and slave devices included in the processor-based system 104. As is well known, the CPU(s) 106 communicates with these other devices by exchanging address, control, and data information over the system bus 112. For example, the CPU(s) 106 can communicate bus transaction requests to a memory controller 114 as an example of a slave device.

Other master and slave devices can be connected to the system bus 112. As illustrated in Figure 6, these devices can include a memory system 116, one or more input devices 118, one or more output devices 120, one or more network interface devices 122, and one or more display controllers 124, as examples. The input device(s) 118 can include any type of input device, including but not limited to input keys, switches, voice processors, etc. The output device(s) 120 can include any type of output device, including but not limited to audio, video, other visual indicators, etc. The network interface device(s) 122 can be any devices configured to allow exchange of data to and from a network 126. The network 126 can be any type of network, including but not limited to a wired or wireless network, a private or public network, a local area network (LAN), a wide local area network (WLAN), and the Internet. The network interface device(s) 122 can be configured to support any type of communications protocol desired. The memory system 116 can include one or more memory units 128(0-N).

The CPU(s) 106 may also be configured to access the display controller(s) 124 over the system bus 112 to control information sent to one or more displays 130. The display controller(s) 124 sends information to the display(s) 130 to be displayed via one or more video processors 132, which process the information to be displayed into a format suitable for the display(s) 130. The display(s) 130 can include any type of display, including but not limited to a cathode ray tube (CRT), a liquid crystal display (LCD), a plasma display, etc.

Those of skill in the art will further appreciate that the various illustrative logical blocks, modules, circuits, and algorithms described in connection with the aspects disclosed herein may be implemented as electronic hardware, instructions stored in memory or in another computer-readable medium and executed by a processor or other processing device, or combinations of both. The master and slave devices described herein may be employed in any circuit, hardware component, integrated circuit (IC), or IC chip, as examples. Memory disclosed herein may be any type and size of memory and may be configured to store any type of information desired. To clearly illustrate this interchangeability, various illustrative components, blocks, modules, circuits, and steps have been described above generally in terms of their functionality. How such functionality is implemented depends upon the particular application, design choices, and/or design constraints imposed on the overall system. Skilled artisans may implement the described functionality in varying ways for each particular application, but such implementation decisions should not be interpreted as causing a departure from the scope of the present disclosure.

The various illustrative logical blocks, modules, and circuits described in connection with the aspects disclosed herein may be implemented or performed with a processor, a Digital Signal Processor (DSP), an Application Specific Integrated Circuit (ASIC), a Field Programmable Gate Array (FPGA) or other programmable logic device, discrete gate or transistor logic, discrete hardware components, or any combination thereof designed to perform the functions described herein. A processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The aspects disclosed herein may be embodied in hardware and in instructions that are stored in hardware, and may reside, for example, in Random Access Memory (RAM), flash memory, Read Only Memory (ROM), Electrically Programmable ROM (EEPROM), registers, a hard disk, a removable disk, a CD-ROM, or any other form of computer readable medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a remote station. In the alternative, the processor and the storage medium may reside as discrete components in a remote station, base station, or server.

It is also noted that the operational steps described in any of the exemplary aspects herein are described to provide examples and discussion. The operations described may be performed in numerous different sequences other than the illustrated sequences. Furthermore, operations described in a single operational step may actually be performed in a number of different steps. Additionally, one or more operational steps discussed in the exemplary aspects may be combined. It is to be understood that the operational steps illustrated in the flow chart diagrams may be subject to numerous different modifications as will be readily apparent to one of skill in the art. Those of skill in the art will also understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

The previous description of the disclosure is provided to enable any person skilled in the art to make or use the disclosure. Various modifications to the disclosure will be readily apparent to those skilled in the art, and the generic principles defined herein may be applied to other variations without departing from the scope of the disclosure as set out in the appended claims. Thus, the disclosure is not intended to be limited to the examples and designs described herein, but is to be accorded the widest scope consistent with the appended claims.

## Claims

1. A vector processor (12), comprising:
a vector register file (16) comprising a plurality of vector registers (18), each vector register configured to store a plurality of accumulator values(46);
a means for receiving an input data vector; and
for each write port of a plurality of write ports of the vector register file of the vector processor:
a means for accessing an input data value of the input data vector;
a means for decoding the input data value to determine a register index indicative of a vector register among the plurality of vector registers in the vector register file;
a means for decoding the input data value to determine an accumulator index indicative of an accumulator value among a plurality of accumulator values of the vector register;
a means for performing a scalar operation on the vector register indicated by the register index, based on the register index and the accumulator index, wherein the scalar operation comprises incrementing the accumulator value indicated by the accumulator index; and
a means for writing a result of the scalar operation to the vector register indicated by the register index.

2. The vector processor of claim 1 wherein:
the vector processor is configured to:
receive an input data vector; and
execute one or more vector operations for each write port of the plurality of write ports to:
access an input data value of the input data vector;
decode the input data value to determine a register index indicative of a vector register among the plurality of vector registers;
decode the input data value to determine an accumulator index indicative of an accumulator value among the plurality of accumulator values of the vector register;
based on the register index and the accumulator index, perform a scalar operation on the vector register indicated by the register index; and
write a result of the scalar operation to the vector register indicated by the register index.

3. The vector processor of claim 2, wherein:
the vector register file comprises a plurality of physical register files each providing one or more write ports among the plurality of write ports;
the vector processor configured to:
receive the input data vector as a plurality of input data vector subsets each corresponding to one physical register file among the plurality of physical register files; and
execute the one or more vector operations by executing the one or more vector operations simultaneously for each physical register file among the plurality of physical register files; or
the vector processor is configured to determine:
the register index by performing one or more logical right shifts of a plurality of bits of the input data value; or
the accumulator index by masking one or more high-order bits of the input data value to zero.

4. The vector processor of claim 2, further configured to execute the one or more vector operations to:
determine, based on two or more of the register indexes corresponding to two or more of the write ports of the plurality of write ports being identical, that two or more scalar operations for the corresponding two or more write ports of the plurality of write ports may be merged; and
combine the two or more scalar operations into a merged scalar operation;
wherein the vector processor is configured to perform the scalar operation by performing the merged scalar operation.

5. The vector processor of claim 4, configured to execute the one or more vector operations to determine that the two or more scalar operations for the corresponding two or more write ports of the plurality of write ports may be merged by further determining that the accumulator index for the two or more write ports are identical.

6. The vector processor of claim 1 integrated into:
an integrated circuit (IC) or
a device selected from the group consisting of a set top box, an entertainment unit, a navigation device, a communications device, a fixed location data unit, a mobile location data unit, a mobile phone, a cellular phone, a computer, a portable computer, a desktop computer, a personal digital assistant (PDA), a monitor, a computer monitor, a television, a tuner, a radio, a satellite radio, a music player, a digital music player, a portable music player, a digital video player, a video player, a digital video disc (DVD) player, and a portable digital video player.

7. A method for performing scalar operations in vector processor, the vector processor comprising a vector register file comprising a plurality of vector registers each vector register configured to store a plurality of accumulator values, the method comprising:
receiving (78), by the vector processor, an input data vector; and
for each write port of a plurality of write ports of the vector register file of the vector processor, executing (80) one or more vector operations to:
access (82) an input data value of the input data vector;
decode the input data value to determine (84) a register index indicative of a vector register among a plurality of vector registers in the vector register file;
decode the input data value to determine (88) an accumulator index indicative of an accumulator value among the plurality of accumulator values of the vector register;
perform (93) a scalar operation on the vector register indicated by the register index, based on the register index and the accumulator index, wherein the scalar operation further comprises incrementing the accumulator value indicated by the accumulator index and wherein the scalar operation for each write port is performed in parallel with the scalar operation for each of the other write ports of the plurality of write ports; and
write a result of the scalar operation to the vector register indicated by the register index.

8. The method of claim 7, wherein:
the vector register file comprises a plurality of physical register files each providing one or more write ports among the plurality of write ports;
the input data vector comprises a plurality of input data vector subsets each corresponding to one physical register file among the plurality of physical register files; and
executing the one or more vector operations comprises executing the one or more vector operations simultaneously for each physical register file among the plurality of physical register files.

9. The method of claim 8, wherein:
determining the register index comprises performing one or more logical right shifts of a plurality of bits of the input data value; or
determining the accumulator index comprises masking one or more high-order bits of the input data value to zero.

10. The method of claim 8, wherein performing the scalar operation comprises incrementing the accumulator value indicated by the accumulator index.

11. The method of claim 8, further comprising:
determining, based on two or more of the register indexes corresponding to two or more write ports of the plurality of write ports being identical, that two or more scalar operations for the corresponding two or more write ports of the plurality of write ports may be merged; and
combining the two or more scalar operations into a merged scalar operation;
wherein performing the scalar operation comprises performing the merged scalar operation.

12. The method of claim 11, wherein determining that the two or more scalar operations for the corresponding two or more write ports of the plurality of write ports may be merged further comprises determining that the accumulator index for the two or more write ports are identical.

13. A non-transitory computer-readable medium, having stored thereon computer-executable instructions for causing a vector processor according to any of claims 1-6 to perform a method according to any one of claims 7 to 12.

## Patentansprüche

1. Ein Vektorprozessor (12), der Folgendes aufweist:
eine Vektorregisterdatei (16), die eine Vielzahl von Vektorregistern (18) aufweist, wobei jedes Vektorregister konfiguriert ist zum Speichern einer Vielzahl von Akkumulatorwerten (46);
Mittel zum Empfangen eines Eingabedatenvektors; und
für jeden Schreib-Port einer Vielzahl von Schreib-Ports der Vektorregisterdatei des Vektorprozessors:
Mittel zum Zugreifen auf einen Eingabedatenwert des Eingabedatenvektors;
Mittel zum Decodieren des Eingabedatenwertes zum Bestimmen eines Registerindex, der ein Vektorregister anzeigt, aus der Vielzahl von Vektorregistern in der Vektorregisterdatei;
Mittel zum Decodieren des Eingabedatenwertes zum Bestimmen eines Akkumulatorindex, der einen Akkumulatorwert anzeigt, aus einer Vielzahl von Akkumulatorwerten des Vektorregisters;
Mittel zum Durchführen einer Skalaroperation an dem Vektorregister, das durch den Registerindex angezeigt wird, basierend auf dem Registerindex und dem Akkumulatorindex, wobei die Skalaroperation Inkrementieren des Akkumulatorwertes aufweist, der durch den Akkumulatorindex angezeigt wird; und
Mittel zum Schreiben eines Ergebnisses der Skalaroperation in das Vektorregister, das durch den Registerindex angezeigt wird.

2. Vektorprozessor nach Anspruch 1, wobei:
der Vektorprozessor konfiguriert ist zum:
Empfangen eines Eingabedatenvektors; und
Ausführen einer oder mehrerer Vektoroperationen für jeden Schreib-Port der Vielzahl von Schreib-Ports zum:
Zugreifen auf einen Eingabedatenwert des Eingabedatenvektors;
Decodieren des Eingabedatenwertes zum Bestimmen eines Registerindex, der ein Vektorregister aus der Vielzahl von Vektorregistern anzeigt;
Decodieren des Eingabedatenwertes zum Bestimmen eines Akkumulatorindex, der einen Akkumulatorwert aus der Vielzahl von Akkumulatorwerten des Vektorregisters anzeigt;
basierend auf dem Registerindex und dem Akkumulatorindex, Durchführen einer Skalaroperation an dem Vektorregister, das durch den Registerindex angezeigt wird; und
Schreiben eines Ergebnisses der Skalaroperation in das Vektorregister, das durch den Registerindex angezeigt wird.

3. Vektorprozessor nach Anspruch 2, wobei:
die Vektorregisterdatei eine Vielzahl von physischen Registerdateien anzeigt, von denen jede einen oder mehrere Schreib-Ports aus der Vielzahl von Schreib-Ports vorsieht;
wobei der Vektorprozessor konfiguriert ist zum:
Empfangen des Eingabedatenvektors als eine Vielzahl von Eingabedatenvektorsubsätzen, von denen jeder einer physischen Registerdatei aus der Vielzahl von physischen Registerdateien entspricht; und
Ausführen der einen oder der mehreren Vektoroperationen durch Ausführen der einen oder der mehreren Vektoroperationen gleichzeitig für jede physische Registerdatei aus der Vielzahl von physischen Registerdateien; oder
der Vektorprozessor konfiguriert ist zum Bestimmen:
des Registerindex durch Durchführen einer oder mehrerer logischer Rechtsverschiebungen einer Vielzahl von Bits des Eingabedatenwert es; oder
des Akkumulatorindex durch Maskieren eines oder mehrerer Bits hoher Ordnung des Eingabedatenwertes auf Null.

4. Vektorprozessor nach Anspruch 2, der weiter konfiguriert ist zum Ausführen der einen oder der mehreren Vektoroperationen zum:
Bestimmen, basierend darauf, dass zwei oder mehr der Registerindizes entsprechend zwei oder mehr der Schreib-Ports der Vielzahl von Schreib-Ports identisch sind, dass zwei oder mehr Skalaroperationen für die entsprechenden zwei oder mehr Schreib-Ports der Vielzahl von Schreib-Ports zusammengeführt werden können; und
Kombinieren der zwei oder mehr Skalaroperationen in eine zusammengeführte Skalaroperation;
wobei der Vektorprozessor konfiguriert ist zum Durchführen der Skalaroperation durch Durchführen der zusammengeführten Skalaroperation.

5. Vektorprozessor nach Anspruch 4, der konfiguriert ist zum Ausführen der einen oder mehreren Vektoroperationen zum Bestimmen, dass die zwei oder mehr Skalaroperationen für die entsprechenden zwei oder mehr Schreib-Ports der Vielzahl von Schreib-Ports zusammengeführt werden können durch weiteres Bestimmen, dass der Akkumulatorindex für die zwei oder mehr Schreib-Ports identisch ist.

6. Vektorprozessor nach Anspruch 1, der integriert ist in:
einen integrierten Schaltkreis bzw. IC (IC = integrated circuit) oder
eine Einrichtung, die aus der Gruppe ausgewählt ist, die auf Folgende besteht: einer Set-Top-Box, einer Unterhaltungseinheit, eine Navigationseinrichtung, einer Kommunikationseinrichtung, einer Dateneinheit mit festem Standort, einer Dateneinheit mit mobilem Standort, einem Mobiltelefon, einem Zellentelefon, einem Computer, einem tragbaren Computer, einem Desktop-Computer, einem persönlichen digitalen Assistenten bzw. PDA, einem Monitor, einem Computermonitor, einem Fernseher, einem Tuner, einem Funkgerät, einem Satellitenfunkgerät, einer Musikabspielvorrichtung, einer digitalen Musikabspielvorrichtung, einer tragbaren Musikabspielvorrichtung, einer digitalen Videoabspielvorrichtung, einer Videoabspielvorrichtung, einer DVD-Abspielvorrichtung (DVD = digital video disc) und einer tragbaren digitalen Videoabspielvorrichtung.

7. Ein Verfahren zum Durchführen von Skalaroperationen in einem Vektorprozessor, wobei der Vektorprozessor eine Vektorregisterdatei aufweist, die eine Vielzahl von Vektorregistern aufweist, wobei jedes Vektorregister konfiguriert ist zum Speichern einer Vielzahl von Akkumulatorwerten, wobei das Verfahren Folgendes aufweist:
Empfangen (78), durch den Vektorprozessor, eines Eingabedatenvektors; und
für jeden Schreib-Port einer Vielzahl von Schreib-Ports der Vektorregisterdatei des Vektorprozessors, Ausführen (80) einer oder mehrerer Vektoroperationen zum:
Zugreifen (82) auf einen Eingabedatenwert des Eingabedatenvektors;
Decodieren des Eingabedatenwertes zum Bestimmen (84) eines Registerindex, der ein Vektorregister aus einer Vielzahl von Vektorregistern in der Vektorregisterdatei anzeigt;
Decodieren des Eingabedatenwertes zum Bestimmen (88) eines Akkumulatorindex, der einen Akkumulatorwert aus der Vielzahl von Akkumulatorwerten des Vektorregisters anzeigt;
Durchführen (93) einer Skalaroperation an dem Vektorregister, das durch den Registerindex angezeigt wird, basierend auf dem Registerindex und dem Akkumulatorindex, wobei die Skalaroperation weiter Inkrementieren des Akkumulatorwertes, der durch den Akkumulatorindex angezeigt wird, aufweist, und wobei die Skalaroperation für jeden Schreib-Port parallel zu der Skalar-Operation für jeden der anderen Schreib-Ports der Vielzahl von Schreib-Ports durchgeführt wird; und
Schreiben eines Ergebnisses der Skalaroperation in das Vektorregister, das durch den Registerindex angezeigt wird.

8. Verfahren nach Anspruch 7, wobei:
die Vektorregisterdatei eine Vielzahl von physischen Registerdateien aufweist, von denen jedes einen oder mehrere Schreib-Ports aus der Vielzahl von Schreib-Ports vorsieht;
der Eingabedatenvektor eine Vielzahl von Eingabedatenvektorsubsätzen aufweist, von denen jeder einer physischen Registerdatei aus der Vielzahl von physischen Registerdateien entspricht; und
Ausführen der einen oder der mehreren Vektoroperationen, was Ausführen der einen oder der mehreren Vektoroperationen gleichzeitig für jede physische Registerdatei aus der Vielzahl von physischen Registerdateien aufweist.

9. Verfahren nach Anspruch 8, wobei:
das Bestimmen des Registerindex Durchführen einer oder mehrerer logischer Rechtsverschiebungen einer Vielzahl von Bits des Eingabedatenwertes aufweist; oder
das Bestimmen des Akkumulatorindex Maskieren eines oder mehrerer Bits hoher Ordnung des Eingabedatenwertes auf Null aufweist.

10. Verfahren nach Anspruch 8, wobei das Durchführen der Skalaroperation Inkrementieren des Akkumulatorwertes aufweist, der durch den Akkumulatorindex angezeigt wird.

11. Verfahren nach Anspruch 8, das weiter Folgendes aufweist:
Bestimmen, basierend darauf, dass zwei oder mehr der Registerindizes, die zwei oder mehr Schreib-Ports der Vielzahl von Schreib-Ports entsprechen, identisch sind, dass zwei oder mehr Skalaroperationen für die entsprechenden zwei oder mehr Schreib-Ports der Vielzahl von Schreib-Ports zusammengeführt werden können; und
Kombinieren der zwei oder mehr Skalaroperationen eine zusammengeführte Skalaroperation;
wobei das Durchführen der Skalaroperation Durchführen der zusammengeführten Skalaroperation aufweist.

12. Verfahren nach Anspruch 11, wobei das Bestimmen, dass die zwei oder mehr Skalaroperation für die entsprechenden zwei oder mehr Schreib-Ports der Vielzahl von Schreib-Ports zusammengeführt werden können, weiter Bestimmen aufweist, dass der Akkumulatorindex für die zwei oder mehr Schreib-Ports identisch ist.

13. Ein nicht transitorisches computerlesbares Medium mit darauf gespeicherten von einem Computer ausführbaren Instruktionen, um einen Vektorprozessor nach einem der Ansprüche 1-6 zu veranlassen ein Verfahren nach einem der Ansprüche 7 bis 12 durchzuführen.

## Revendications

1. Processeur vectoriel (12), comprenant :
un fichier de registres vectoriels (16) comprenant une pluralité de registres vectoriels (18), chaque registre vectoriel étant configuré de manière à stocker une pluralité de valeurs d'accumulateur (46) ;
un moyen pour recevoir un vecteur de données d'entrée ; et
pour chaque port d'écriture d'une pluralité de ports d'écriture du fichier de registres vectoriels du processeur vectoriel :
un moyen pour accéder à une valeur de données d'entrée du vecteur de données d'entrée ;
un moyen pour décoder la valeur de données d'entrée en vue de déterminer un index de registre indicatif d'un registre vectoriel parmi la pluralité de registres vectoriels dans le fichier de registres vectoriels ;
un moyen pour décoder la valeur de données d'entrée en vue de déterminer un index d'accumulateur indicatif d'une valeur d'accumulateur parmi une pluralité de valeurs d'accumulateur du registre vectoriel ;
un moyen pour mettre en œuvre une opération scalaire sur le registre vectoriel indiqué par l'index de registre, sur la base de l'index de registre et de l'index d'accumulateur, dans lequel l'opération scalaire comprend l'incrémentation de la valeur d'accumulateur indiquée par l'index d'accumulateur ; et
un moyen pour écrire un résultat de l'opération scalaire dans le registre vectoriel indiqué par l'index de registre.

2. Processeur vectoriel selon la revendication 1, dans lequel :
le processeur vectoriel est configuré de manière à :
recevoir un vecteur de données d'entrée ; et
exécuter une ou plusieurs opérations vectorielles pour chaque port d'écriture de la pluralité de ports d'écriture, pour :
accéder à une valeur de données d'entrée du vecteur de données d'entrée ;
décoder la valeur de données d'entrée en vue de déterminer un index de registre indicatif d'un registre vectoriel parmi la pluralité de registres vectoriels ;
décoder la valeur de données d'entrée en vue de déterminer un index d'accumulateur indicatif d'une valeur d'accumulateur parmi la pluralité de valeurs d'accumulateur du registre vectoriel ;
sur la base de l'index de registre et de l'index d'accumulateur, mettre en œuvre une opération scalaire sur le registre vectoriel indiqué par l'index de registre ; et
écrire un résultat de l'opération scalaire dans le registre vectoriel indiqué par l'index de registre.

3. Processeur vectoriel selon la revendication 2, dans lequel :
le fichier de registres vectoriels comprend une pluralité de fichiers de registres physiques fournissant chacun un ou plusieurs ports d'écriture parmi la pluralité de ports d'écriture ;
le processeur vectoriel est configuré de manière à :
recevoir le vecteur de données d'entrée sous la forme d'une pluralité de sous-ensembles de vecteurs de données d'entrée correspondant chacun à un fichier de registres physiques parmi la pluralité de fichiers de registres physiques ; et
exécuter ladite une ou lesdites opérations vectorielles en exécutant simultanément ladite une ou lesdites plusieurs opérations vectorielles pour chaque fichier de registres physiques parmi la pluralité de fichiers de registres physiques ; ou
le processeur vectoriel est configuré de manière à déterminer :
l'index de registre en mettant en œuvre un ou plusieurs décalages logiques à droite d'une pluralité de bits de la valeur de données d'entrée ; ou
l'index d'accumulateur en masquant un ou plusieurs bits d'ordre supérieur de la valeur de données d'entrée à zéro.

4. Processeur vectoriel selon la revendication 2, configuré en outre de manière à exécuter ladite une ou lesdites plusieurs opérations vectorielles en vue de :
déterminer, sur la base de deux des index de registres ou plus correspondant à deux des ports d'écriture ou plus de la pluralité de ports d'écriture qui sont identiques, que deux opérations scalaires ou plus pour les deux ports d'écriture correspondants ou plus de la pluralité de ports d'écriture peuvent être fusionnées ; et
combiner les deux opérations scalaires ou plus en une opération scalaire fusionnée ;
dans lequel le processeur vectoriel est configuré de manière à mettre en œuvre l'opération scalaire en mettant en œuvre l'opération scalaire fusionnée.

5. Processeur vectoriel selon la revendication 4, configuré de manière à exécuter ladite une ou lesdites plusieurs opérations vectorielles en vue de déterminer que les deux opérations scalaires ou plus pour les deux ports d'écriture correspondants ou plus de la pluralité de ports d'écriture peuvent être fusionnées, en déterminant en outre que les index d'accumulateur pour les deux ports d'écriture ou plus sont identiques.

6. Processeur vectoriel selon la revendication 1, lequel est intégré dans :
un circuit intégré (IC) ; ou
un dispositif sélectionné à partir du groupe constitué par un décodeur, une unité de divertissement, un dispositif de navigation, un dispositif de communication, une unité de données d'emplacement fixe, une unité de données d'emplacement mobile, un téléphone mobile, un téléphone cellulaire, un ordinateur, un ordinateur portable, un ordinateur de bureau, un assistant numérique personnel (PDA), un moniteur, un écran d'ordinateur, un téléviseur, un syntoniseur, une radio, une radio satellite, un lecteur de musique, un lecteur de musique numérique, un lecteur de musique portatif, un lecteur vidéo numérique, un lecteur vidéo, un lecteur de disque vidéo numérique (DVD) et une lecteur vidéo numérique portatif.

7. Procédé de mise en œuvre d'opérations scalaires dans un processeur vectoriel, le processeur vectoriel comprenant un fichier de registres vectoriels comprenant une pluralité de registres vectoriels, chaque registre vectoriel étant configuré de manière à stocker une pluralité de valeurs d'accumulateur, le procédé comprenant les étapes ci-dessous consistant à :
recevoir (78), par le biais du processeur vectoriel, un vecteur de données d'entrée ; et
pour chaque port d'écriture d'une pluralité de ports d'écriture du fichier de registres vectoriels du processeur vectoriel, exécuter (80) une ou plusieurs opérations vectorielles en vue de :
accéder (82) à une valeur de données d'entrée du vecteur de données d'entrée ;
décoder la valeur de données d'entrée en vue de déterminer (84) un index de registre indicatif d'un registre vectoriel parmi la pluralité de registres vectoriels dans le fichier de registres vectoriels ;
décoder la valeur de données d'entrée en vue de déterminer (88) un index d'accumulateur indicatif d'une valeur d'accumulateur parmi la pluralité de valeurs d'accumulateur du registre vectoriel ;
mettre en œuvre (93) une opération scalaire sur le registre vectoriel indiqué par l'index de registre, sur la base de l'index de registre et de l'index d'accumulateur, dans lequel l'opération scalaire comprend l'incrémentation de la valeur d'accumulateur indiquée par l'index d'accumulateur, et dans lequel l'opération scalaire pour chaque port d'écriture est mise en œuvre en parallèle avec l'opération scalaire pour chacun des autres ports d'écriture de la pluralité de ports d'écriture ; et
écrire un résultat de l'opération scalaire dans le registre vectoriel indiqué par l'index de registre.

8. Procédé selon la revendication 7, dans lequel :
le fichier de registres vectoriels comprend une pluralité de fichiers de registres physiques fournissant chacun un ou plusieurs ports d'écriture parmi la pluralité de ports d'écriture ;
le vecteur de données d'entrée comprend une pluralité de sous-ensembles de vecteurs de données d'entrée correspondant chacun à un fichier de registres physiques parmi la pluralité de fichiers de registres physiques ; et
l'étape d'exécution de ladite une ou desdites plusieurs opérations vectorielles comprend l'étape consistant à exécuter simultanément ladite une ou lesdites plusieurs opérations vectorielles pour chaque fichier de registres physiques parmi la pluralité de fichiers de registres physiques.

9. Procédé selon la revendication 8, dans lequel :
l'étape de détermination de l'index de registre comprend l'étape consistant à mettre en œuvre un ou plusieurs décalages logiques à droite d'une pluralité de bits de la valeur de données d'entrée ; ou
l'étape de détermination de l'index d'accumulateur comprend l'étape consistant à masquer un ou plusieurs bits d'ordre supérieur de la valeur de données d'entrée à zéro.

10. Procédé selon la revendication 8, dans lequel l'étape de mise en œuvre de l'opération scalaire comprend l'étape consistant à incrémenter la valeur d'accumulateur indiquée par l'index d'accumulateur.

11. Procédé selon la revendication 8, comprenant en outre les étapes ci-dessous consistant à :
déterminer, sur la base de deux des index de registres ou plus correspondant à deux des ports d'écriture ou plus de la pluralité de ports d'écriture qui sont identiques, que deux opérations scalaires ou plus pour les deux ports d'écriture correspondants ou plus de la pluralité de ports d'écriture peuvent être fusionnées ; et
combiner les deux opérations scalaires ou plus en une opération scalaire fusionnée ;
dans lequel l'étape de mise en œuvre de l'opération scalaire comprend l'étape consistant à mettre en œuvre l'opération scalaire fusionnée.

12. Procédé selon la revendication 11, dans lequel l'étape consistant à déterminer que les deux opérations scalaires ou plus pour les deux ports d'écriture correspondants ou plus de la pluralité de ports d'écriture peuvent être fusionnées comprend l'étape consistant en outre à déterminer que les index d'accumulateur pour les deux ports d'écriture ou plus sont identiques.

13. Support non transitoire lisible par ordinateur, sur lequel sont stockées des instructions exécutables par ordinateur pour amener un processeur vectoriel selon l'une quelconque des revendications 1 à 6 à mettre en œuvre un procédé selon l'une quelconque des revendications 7 à 12.
